# EUROPEAN PATENT APPLICATION

(11) **EP 4 163 930 A2**
(43) Date of publication of application: **12.04.2023**
(21) Application number: 22195304.5
(22) Date of filing: 13.09.2022
(51) Int. Cl.: G21B 3/00

(54) **DEVICE AND METHOD FOR THIRD LOW-TEMPERATURE CONTROLLABLE NUCLEAR FUSION**

(30) Priority: 14.09.2021 CN 202111096693
(71) Applicant: Chen, Shihao, Changchun Jilin 130021 (CN)
(72) Inventor: CHEN, Yuxing, Changchun (CN); CHEN, Ziwei, Changchun (CN); JIANG, Yunpeng, Changchun (CN); CHEN, Suzhen, Changchun (CN); CHEN, Shihao, Changchun (CN)
(74) Representative: Sach, Greg Robert

(57) **Abstract**

A device and method for third low-temperature controllable nuclear fusion is disclosed. The main substances used for nuclear fusion in the disclosure are polyatomic molecules, namely lithium deuteride 6, lithium deuteride 7 and beryllium 9, and a specific method for controlling the intensity of nuclear fusion reaction is provided. After neutrons are generated, a neutron proliferation reaction and a self-circulation continuous nuclear fusion reaction are formed. The main reaction is as follows: firstly, deuterons react with one another to generate neutrons, then the neutrons react with a lithium-6 nucleus d to generate a tritium nucleus t, the t reacts with a lithium-7 nucleus, the neutrons react with a beryllium-9 nucleus, and finally, two neutrons and two helium-4 nucleuses are released.

## Description

### TECHNICAL FIELD

The present disclosure relates to the technical field of nuclear energy, in particular to a device and method for third low-temperature controllable nuclear fusion.

### BACKGROUND ART

So far, controlled nuclear fusion has not been achieved. This is because controlled nuclear fusion not only needs a high temperature of over 100 million degrees, but also meets the Lawson condition. The Lawson condition is not easy to meet for the plasma with a high temperature of more than 100 million degrees. In view of this, we put forward ways to realize nuclear fusion at low temperature [1]-[4]. Reference [4] has commented on references [1]-[3], and made improvements to their shortcomings, so I won't repeat them here. Reference [4] improved some shortcomings of references [1]-[3], but the efficiency was still low, and no specific method to control the intensity of nuclear fusion reaction was put forward. On the other hand, the nuclear fusion substances in references [1]-[4] are mainly monatomic molecules. In view of these shortcomings of documents [1]-[4], the present disclosure is proposed.

The present disclosure is characterized in that, unlike [1]-[4], the main substances used for nuclear fusion are polyatomic molecules, namely, lithium deuterate 6, lithium deuterate 7 and beryllium 9, and a specific method for controlling the intensity of nuclear fusion reaction is proposed. According to this technique, after the generation of neutrons, a neutron multiplication reaction and a self-circulating continuous nuclear fusion reaction are formed. The main reaction is that firstly deuteron reacts with deuteron to produce neutron, then neutron reacts with lithium 6 nucleus to produce tritium nucleus T. Finally, two neutrons and two helium 4 nuclei are released when T reacts with lithium 7 nucleus and neutron reacts with beryllium 9 nucleus. In these processes, nuclear energy is released. In this nuclear fusion reaction, no radioactive daughter nuclei are produced; the incident ion energy is low, and nuclear energy is easier to release, with higher efficiency, simple structure and low cost.

### SUMMARY

The present disclosure proposes the following two methods to achieve the above purpose.

The device is composed of a nuclear beam generation part J, a reactor V filled with a nuclear fusion substance, a system C for controlling the intensity and switching of the nuclear reaction, an electric heating system W, a thermal energy output system H, and an electric energy output system E;
there are a variety of choices for the nuclear beam J, wherein three kinds of nuclear energy beam is a single nucleus 50KeV-1MeV t triton beam, a single nucleus energy 100KeV-5MeV deuteron beam d, the energy of a single nucleus 2- p 10MeV proton beam; the nuclear beam generation part J is made by ionizing chamber and positive ion linear accelerator according to known mature technology;
there are two layers of the wall of the reaction kettle V, the inner layer is a neutral reflective layer, and the outer layer is a neutral absorbing layer, and the neutral reflective layer is from beryllium atom ⁹Be board production; neutron absorbing layer by boron atom ¹⁰B board production; the reactor V is filled with nuclear fusion substance, and the nuclear polymented substance is from a weight ratio of 30% -70% deuterated lithium 6 molecule ⁶LiD and 70% -30% deuterated lithium 7 molecule constitutes ⁷LiD, nuclear agonuclear nucleus is also a target nuclear of the beam stream;
there are three types of reactive kettle V: rectangular shape, cylindrical, and spherical; the endonion flows into the polymetled substance, neutron, neutralization due to multiple acts, the kinetic energy is reduced, and the neutron absorption cross section increases, the thickness of the reactor V wall is not smaller than that reduces the neutron kinetic energy to 25.3MeV, that is, the V wall thickness is determined by the average kinetic energy of the neutron; when the shape of the reaction kettle is determined, the wall thickness and volume are determined, the medium nuclear polyvertency reaction intensity of the reactor V is determined with the neutron number and the number of fractal materials; the number of neutrons depends on the nuclear beam J and N; the accelerating voltage in the accelerator is controlled so that the average energy of in the nuclear beam J is accurate, at this time, the intensity of the nuclear beam J only depends on the average density of **n**_{N} in the accelerator; n_{N} is determined by the number density of atoms in the ionization chamber and the voltage therein; in this way, the number density, voltage, voltage of the atom in the ionization chamber is controlled according to the known conventional method, and the average energy of the core J and the core is controlled by the voltage in the accelerator;
the cross section of the neutron generated in the nuclear stream J nucleation and the target nuclear collision decisively N, Only if E_{N} In a certain range (E_{N1} , E_{N2}) within this cross-section σ _{N} It was significantly different from zero; and for a selected nuclear incident target nucleus, (E_{N1} , E_{N2} ) Is determined, and when E_{N} take the corresponding specific value E_{N0} and σ _{N} takes a maximum value; in selecting the acceleration voltage of the accelerator, such that E_{N} in (E_{N1} , E_{N2} ) within the range.

Selecting the accelerator voltage in the accelerator, so that a system C for controlling the intensity of the nuclear reaction and the opening and closing is cooled to a liquid state by a nuclear beam intensity control device J, a fusion substance quantity N control device, and a fusion substance vapor, and finally refluxed to the reaction vessel, controlling the intensity of the nuclear beam J and the average energy of the are means for controlling the number density of atoms in the ionization chamber, the voltage, and the voltage in the accelerator, the larger the J, the stronger the fusion reaction;
the bottom plate of the reaction kettle V is a valve that can be opened and closed, and the size of the valve opening O is automatically controlled according to the input signal; the molten fusion material, that is, the molten liquid, can flow out from the opening O, so that the fusion material is reduced and the fusion reaction is weakened; when the accelerator is turned off and the fusion material is completely released, the fusion reaction stops; the reaction kettle V is filled with fusion substances, the accelerator is turned on, and the nuclear beam J is input, so that the fusion reaction begins; the opening O is connected with a plurality of shallow pipes P with a depth of d, wherein d is the maximum depth of the shallow pipes P where the nuclear fusion reaction cannot continue, and the number of the shallow pipes P is determined according to the needs; the molten liquid can also flow into the reactor V through the shallow pipe P from the opening O under the push of the push rod made of beryllium atom ⁹Be, and the fusion substances in V increase, the reaction is enhanced and the temperature rises; another way to control the reaction intensity is to insert the isolation plate made of boron 10 into the molten fusion material; the depth of insertion, according to the need to determine; the deeper the insertion, the more the fusion reaction weakens; full insertion, the fusion reaction stops; this is because boron 10 can significantly absorb neutrons, and the deeper it is inserted, the more the number of neutrons participating in the fusion reaction decreases; complete insertion can make the number of neutrons lower than the sustained reaction threshold;
the intensity of the polyvertency reaction is controlled by controlling the temperature of the polydreatment reaction.The temperature measuring instrument T is mounted above the reaction kettle V, T transforms the measurement result into the corresponding electrical signal, and delivers the electrical signal to the core J control system and the valve control system. Controlling the temperature of the polydree at its boiling point To the following. When the temperature is close to To When the temperature control device outputs the signal to the control nuclear reaction strength and the system C, the reduction of beam J and the number of polygraphic substances, thereby reducing nuclear reaction strength and temperature; when the polylate temperature is less than 700° C, open the valve, push the polymented substance in the shallow P push back into the reaction kettle, enhance the rib stream J, increase the reinforcement, and the temperature increases; another method is that when the temperature is close to , the boron 10 isolation plate is inserted into an appropriate depth to reduce the reaction intensity; when the temperature of the fusion material is lower than 700° C , the boron 10 isolation plate is pulled out, and the reaction is enhanced and the temperature rises.

When the fusion reaction makes the temperature of the fusion substance exceed its melting point, the vapor of the fusion substance will be produced; When the boiling point is reached, a large amount of steam is produced. After the steam flows out, the fusion substance decreases and the reaction intensity decreases. The steam flows from the steam outlet above the reaction kettle to the steam pipeline, which is connected to the cylinder below the bottom plate of the reaction kettle. The steam pipeline is made of boron 10, and a cooling fluid pipeline is arranged outside the steam pipeline, the circulating fluid in the cooling fluid pipeline cools the fusion substance steam in the steam pipeline into a liquid state; the outlet of the steam pipeline is on the cylinder below the bottom plate of the reaction kettle, and a one-way open valve is installed at the outlet after the fusion material steam is cooled to liquid state, it pushes the one-way valve along the pipeline, flows into the cylinder under the bottom plate of the reaction kettle, and is finally pushed back to the reaction kettle V, the one-way valve blocks the molten liquid in the cylinder from flowing to the steam pipeline.

Nuclear beam accelerated by the linear accelerator to J energy setting, perpendicularly incident on the fusion material, with the nuclear fusion reactions occurring substance released neutrons, neutron induced nuclear fusion reactor materials series, neutrons and other particles released and nuclear; triton t corresponding to the beam, the neutrons released major nuclear reaction is as follows:

²H(t, n)⁴ He, Q=17.6MeV (1)

⁷Li(t, n2α)n, Q=8.864MeV (2)

the main nuclear reactions corresponding to deuteron d beam and neutron release are as follows:

²H(d, n) He³, Q=3.26891MeV (3)

⁷Li(d, nα) He⁴, Q=15.12168MeV, (4)

⁷Li(d, p) Li⁸, Q=-0.19194MeV, (5)

⁸Li→β⁻+2α+16MeV, T_{1/2}=838m, (6)

The main nuclear reactions corresponding to proton P beam and neutron release are as follows:

²H(p, np)¹H, Q=-2.22457MeV, (7)

⁷Li(p, n)⁷Be, Q=-1.64424MeV, (8)

⁷Be+e⁻→⁷Li+0.8819MeV, T_{1/2}=53.29d (9)

The main fusion reactions caused by neutrons are as follows:

⁶Li(n, t)⁴He, Q=4.783MeV, (10)

⁶Li(n, nd)⁴He, Q=-1.47515MeV, (11)

²H(n, 2n) ¹H, Q=-2.224MeV, (12)

⁷Li(n, nα)³H, Q=-2.46515MeV, (13)

³He(n, p)³H, Q=0.764MeV, (14)

It can be seen from (1)-(14) that these reactions constitute a circular and sustainable reaction; beryllium has a large reflection cross section for neutrons, especially for low energy neutrons, so the neutron reflection layer is made; a neutron absorption layer is arranged on the outer surface of the reactor V; the absorption cross section of boron for neutrons is very large, therefore, the neutron absorption layer is made;
the reaction is as follows,

   ¹⁰B(n,α)⁷ Li,, Q=2.79055MeV, (15)

   ¹⁰B(n, tα)⁴He,, Q=2.79055MeV (16)
the thermal energy output system H generated by the nuclear reaction is composed of cooling fluid in the gap between the neutron absorption layer and the outer shell layer and the pipeline connected with it, and a power device that drives these fluids to circulate;
conductor system power output terminal E from the DC power supply, DC power supply, respectively positive and negative electrodes and electrical communication with the opposite points in the reactor configuration V, such that the nuclear reaction produced positive ions and electrons to flow through the electrical power supply, respectively, a negative electrode and the positive electrode, the output power;
an electric heating device W is arranged below a plurality of shallow pipelines P connected with the valve opening O, which can reheat and melt the cooled and solidified fusion material as required;
the manner described above, the reactor charged proportionally V lithium deuteride fusion material 6 and lithium 7 deuteride, accelerator actuation, the input beam nuclear, nuclear energy is released there; otherwise, turn off the accelerator, the substance flowing from the fusion reactor, nuclear reaction stops.

The second method is characterized in the fusion material, beryllium pow ⁹Be is added in a weight ratio of 20 to 60 percent of lithium deuterate 6, 60 to 20 percent of lithium deuterate 7, beryllium powder ⁹Be is 20 to 40 percent; the main nuclear reaction associated with beryllium is:

⁹Be(d, α)⁷Li, Q=7.15215MeV, (17)

⁹Be(d, t)⁸Be, Q=4.59269MeV, (18)

⁸Be→2α+0.09188, T_{1/2}=6.7eV (19)

⁹Be(d, γ)¹¹B, Q=15.81646MeV, (20)

⁹Be(d, d2α)n, Q=-1.5727MeV, (21)

⁹Be(d, 2α)³H, Q=4.68453MeV, (22)

⁹Be(n, 2n) ⁸Be, Q=-1.6655MeV, (23)

⁹Be(n, α)⁶He, Q=-0.598MeV, (24)

⁶He→β⁻+⁶Li+3.5067MeV, T_{1/2}=806.7m (25)

⁹Be(t, n) ¹¹B, Q=9.55924MeV, (26)

⁹Be(t, t2α)n, Q=-1.5727MeV, (27)

⁹Be(t, nd2α)n, Q=-1.5727MeV, (28)

⁹Be(α, n)¹²C, Q=5.70205MeV, (29)

⁹Be(α, nα)⁸Be, Q=-1.66454MeV, (30)

⁹Be(p, n)⁹B, Q=-1.66454MeV, (31)

⁹B→p+2α+0.2771MeV, T_{1/2}=0.54keV (32)

### BRIEFT DESCRIPTION OF THE DRAWINGS

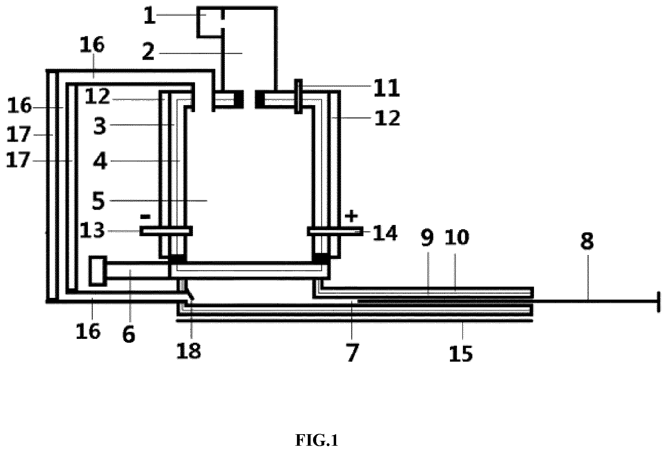

FIG. 1 is a schematic vertical section of a cryogenic controlled nuclear fusion device. In the FIG. 1, 1 is the ionization chamber where positive ions are generated and transported to the accelerator; 2 is a positive ion accelerator, and positive ions are vertically incident to the nuclear fusion reactor through the accelerator opening; 3 is the inner layer of the reactor wall, that is, the neutron reflection layer made of beryllium 9; 4 is the outer layer of the reactor wall, namely the neutron absorption layer made of boron 10; 5 is the reaction kettle; 6 is a device that automatically controls the opening of the bottom plate to be large and small, and fully open and closed according to the input signal; 7 is the shallow pipeline that flows into after the melt flowing out of the reaction kettle is dispersed; 8 is a push rod which pushes the molten liquid in the shallow pipeline back to the reaction kettle; 9 is the inner layer of P wall of molten shallow pipeline made of beryllium 9; 10 is the outer layer of P wall of shallow pipeline made of boron 10; 11 is a temperature measurement and measurement result output device; 12 is a pipe that circulates the cooling fluid around the reaction kettle; 13 is a terminal connected to the negative pole of the DC power supply; 14 is a terminal connected to the positive pole of the DC power supply; 15 is a heater for heating the molten shallow pipeline; 16 is a fusion material steam pipe, and the wall of the steam pipe is made of boron 10; 17 is the circulating cooling fluid pipe of the fusion material steam pipe; 18 is a one-way open valve at the outlet after the fusion material steam is cooled to liquid.

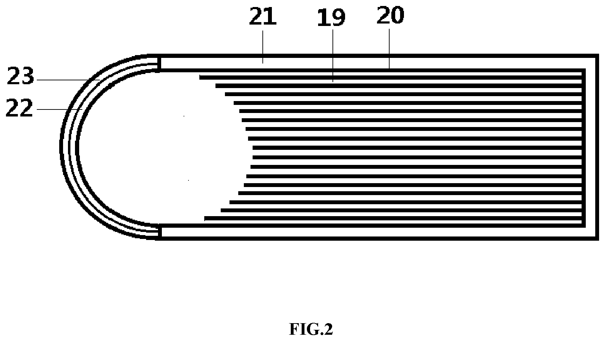

FIG. 2 is a top sectional view of the molten shallow pipeline under the reactor.In the figure, 19 is the front of the shallow pipeline; 20 is the next door between shallow pipes; 21 is the neutron absorption layer around the shallow pipeline; 22 is the inner layer of the pipe wall which is communicated with the pipe at the bottom of the reaction kettle and made of beryllium 9; 23 is the outer layer of the pipe wall made of boron 10, which is communicated with the pipe at the bottom of the reactor.

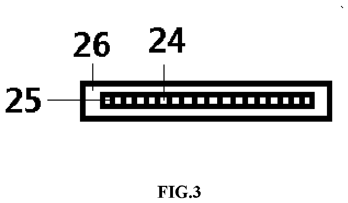

FIG. 3 is a side sectional view of a shallow pipe. In the figure, 24 is a shallow pipeline; 25 is the next door between shallow pipes; 26 is the neutron absorption layer around the shallow pipeline.

### DETAILED DESCRIPTION OF THE EMBODIMENTS

In order to enable those skilled in the art to better understand the technical scheme of the present disclosure, the present disclosure will be further described in detail below with reference to the accompanying drawings. Traditionally, deuterium ion D was ionized from heavy water and transported to accelerator with accelerating voltage of 200,000 volts and current of 50 µ A. Take 50g of lithium deuteride 6, 30g of lithium deuteride 7 and 20g of beryllium powder, and fill them into the cylindrical container V. V has an internal height of 62mm, an internal diameter of 64mm, a volume of 200ml and a wall thickness of 40mm, in which the neutron reflection layer made of ⁹Be is 20mm thick, and the neutron absorption layer made of ¹⁰B is 20mm thick. The bottom plate of the cylinder is a valve that can automatically open, close or open an appropriate opening according to the need. Connected to the bottom is a round pipe with an inner diameter of 64mm, which is connected to 50 shallow pipes P with a length of 400mm, a depth of 1.1mm and a horizontal position. After the valve is opened, the molten liquid in the reactor V flows into these shallow pipes P. The shallow pipe P is made of 5 mm thick boron 10. At the end of the shallow pipe P there is a melt push rod matched to the pipe of rectangular cross section, which can push the melt back into the reaction vessel V.

There is a steel shell outside the neutron absorption layer, which is 5cm apart. In this gap and the pipeline connected with it, there is cooling water that circulates under the drive of the pump.

In the reaction kettle V, the two points of the diameter are connected to the positive and negative electrodes of the 100 volt DC power supply with a wire and a series electrical appliance, respectively, so that the electron and positive ions generated by the V is flowed to the positive and negative electrode of the DC power supply, respectively.

The infrared temperature measurement is mounted above the reactor V. The measurement results are converted to the corresponding electrical signal T, the electrical signal is delivered to the core control system and the valve control system.

After making this nuclear fusion device in the above manner, the acceleration voltage and the ionion current are adjusted to 20,000 volts and 50 µ A, respectively, and the ionion is vertically incident to fill the deuterated lithium 6, deuterated lithium 7 and beryllium. 9 of the container. Various reactions of neutron proliferation and (1) - (32) occur in the polylate substance, release nuclear energy, these nuclear energy conversion to thermal energy and electrical energy delivery.

When the polyverted temperature is close to 1000° C, the temperature control device is automatically activated, and the core stream j is automatically reduced. At the same time, the valve opening opens, the polymetled substance in the container V is reduced, the nuclear polymerization reaction is reduced, the temperature is reduced; when the temperature reaches or exceeds 1000° C At the time, J is reduced to zero, and the polylate substance completely flows out and dispersed into the shallow Pipe P, and the nuclear polymetry reaction stops. When the temperature is reduced to 700 degrees, the J to a very large, open the valve, reinstall the fused polylate substance in the conduit P to reinforce the reaction.

### DETAILED DESCRIPTION OF THE EMBODIMENTS

[1] Chen Suzhen a low temperature controlled nuclear fusion device and its implementation, application number: 201910731956.1, Application Day: 2019.7.29.
[2]Chen, S.H. and Chen Z.W.(2020), A Possible Way to Realize Controlled Nuclear Fusion at Low Temperatures, World Journal of Science and Technology, 10.23-31. doi: 10.4236/wjnst.2020.101003
[3] An Implementation Method and Apparatus for Chen Suzhen Low Temperature Controlled Nuclear Fusion, Application Number: 202010556617.7, Application Day: 2020.6.12.
[4] Chen Suzhen Number of proliferations to achieve low temperature controlled nuclear polymented second way and apparatus, Application Number: 202110158578.X, Application Day: February 1, 2021.
[5] JANIS Book of triton-induced cross-sections, Comparison of evaluated and experimental data from ENDF/B-VIII.0, TENDL-2019 and EXFOR, N. Soppera, E. Dupont,∗ M. Fleming OECD NEA Data Bank, ∗ current address: CEA, Irfu, Université Paris-Saclay, September 2020.
[6] JANIS Book of deuteron-induced cross-sections, Comparison of evaluated and experimental data from ENDF/B-VIII.0, TENDL-2019 and EXFOR, N. Soppera, E. Dupont,∗ M. Fleming OECD NEA Data Bank, ∗ current address: CEA, Irfu, Université Paris-Saclay, September 2020
[7] JANIS Book of proton-induced cross-sections, Comparison of evaluated and experimental data from ENDF/B-VIII.0, IAEA/PD-2019, JENDL/PD-2016.1, TENDL-2019 and EXFOR, N. Soppera, E. Dupont,∗ M. Fleming, OECD NEA Data Bank, ∗ current address: CEA, Irfu, Université Paris-Saclay,September 2020
[8] JANIS Book of neutron-induced cross-sections, Comparison of evaluated and experimental data from BROND-3.1, CENDL-3.2, EAF-2010, ENDF/B-VIII.0, IRDFF-II, JEFF-3.3, JENDL-4.0u, JENDL/HE-2007, TENDL-2019 and EXFOR, N. Soppera, E. Dupont,∗ M. Fleming OECD NEA Data Bank, current address: CEA, Irfu, UniversitéParis -Saclay, September 2020.
[9] JANIS Book of alpha-induced cross-sections, Comparison of evaluated and experimental data from JENDL/AN-2005, TENDL-2019 and EXFOR, N. Soppera, E. Dupont,∗ M. Fleming, OECD NEA Data Bank, current address: CEA, Irfu, Université Paris -Saclay, September 2020.

## Claims

1. A device and method for third low-temperature controllable nuclear fusion, wherein the device is composed of a nuclear beam generation part J, a reactor V filled with a nuclear fusion substance, a system C for controlling the intensity and switching of the nuclear reaction, an electric heating system W, a thermal energy output system H, and an electric energy output system E;
there are a variety of choices for the nuclear beam J, wherein three kinds of nuclear energy beam is a single nucleus 50KeV-1MeV t triton beam, a single nucleus energy 100KeV-5MeV deuteron beam d, the energy of a single nucleus 2- p 10MeV proton beam; the nuclear beam generation part J is made by ionizing chamber and positive ion linear accelerator according to known mature technology;
there are two layers of the wall of the reaction kettle V, the inner layer is a neutral reflective layer, and the outer layer is a neutral absorbing layer, and the neutral reflective layer is from beryllium atom ⁹Be board production; neutron absorbing layer by boron atom ¹⁰B board production; the reactor V is filled with nuclear fusion substance, and the nuclear polymented substance is from a weight ratio of 30% -70% deuterated lithium 6 molecule ⁶ LiD and 70% -30% deuterated lithium 7 molecule ⁷ LiD constitutes, nuclear agonuclear nucleus is also a target nuclear of the beam stream;
there are three types of reactive kettle V: rectangular shape, cylindrical, and spherical; the endonion flows into the polymetled substance, neutron, neutralization due to multiple acts, the kinetic energy is reduced, and the neutron absorption cross section increases, the thickness of the reactor V wall is not smaller than that reduces the neutron kinetic energy to 25.3 MeV, that is, the V wall thickness is determined by the average kinetic energy of the neutron;
when the shape of the reaction kettle is determined, the wall thickness and volume are determined, the medium nuclear polyvertency reaction intensity of the reactor V is determined with the neutron number and the number of fractal materials ;
the number of neutrons depends on the nuclear beam J and N;
the accelerating voltage in the accelerator is controlled so that the average energy of in the nuclear beam J is accurate,
at this time, the intensity of the nuclear beam J only depends on the average density of **n**_{N} in the accelerator;
**n**_{N} is determined by the number density of atoms in the ionization chamber and the voltage therein;
in this way, the number density, voltage, voltage of the atom in the ionization chamber is controlled according to the known conventional method, and the average energy of the core J and the core is controlled by the voltage in the accelerator;
the cross section of the neutron generated in the nuclear stream J nucleation and the target nuclear collision decisively N, only in a determined range, this section is not equal to zero;
for the selected incident nuclear and target core, (E_{N1},E_{N2}) is determined, and when E_{N} takes the corresponding specific value E**_{N0}** Time, σ _{N} takes a large value;
selecting the accelerator voltage in the accelerator, so that (E_{N1},E_{N2});
a system C for controlling the intensity of the nuclear reaction and the opening and closing is cooled to a liquid state by a nuclear beam intensity control device J, a fusion substance quantity N control device, and a fusion substance vapor, and finally refluxed to the reaction vessel,
controlling the intensity of the nuclear beam J and the average energy of the are means for controlling the number density of atoms in the ionization chamber, the voltage, and the voltage in the accelerator, the larger the J, the stronger the fusion reaction;
the bottom plate of the reaction kettle V is a valve that can be opened and closed, and the size of the valve opening O is automatically controlled according to the input signal;
the molten fusion material, that is, the molten liquid, can flow out from the opening O, so that the fusion material is reduced and the fusion reaction is weakened;
when the accelerator is turned off and the fusion material is completely released, the fusion reaction stops;
the reaction kettle V is filled with fusion substances, the accelerator is turned on, and the nuclear beam J is input, so that the fusion reaction begins;
the opening O is connected with a plurality of shallow pipes P with a depth of d, wherein d is the maximum depth of the shallow pipes P where the nuclear fusion reaction cannot continue, and the number of the shallow pipes P is determined according to the needs;
the molten liquid can also flow into the reactor V through the shallow pipe P from the opening O under the push of the push rod made of beryllium atom ⁹Be, and the fusion substances in V increase, the reaction is enhanced and the temperature rises;
another way to control the reaction intensity is to insert the isolation plate made of boron 10 into the molten fusion material;
the depth of insertion, according to the need to determine;
the deeper the insertion, the more the fusion reaction weakens;
full insertion, the fusion reaction stops;
this is because boron 10 can significantly absorb neutrons, and the deeper it is inserted, the more the number of neutrons participating in the fusion reaction decreases;
complete insertion can make the number of neutrons lower than the sustained reaction threshold;
the intensity of the polyvertency reaction is controlled by controlling the temperature of the polydreatment reaction.The temperature measuring instrument T is mounted above the reaction kettle V, T transforms the measurement result into the corresponding electrical signal, and delivers the electrical signal to the core J control system and the valve control system. Controlling the temperature of the polydree at its boiling point To the following. When the temperature is close to To When the temperature control device outputs the signal to the control nuclear reaction strength and the system C, the reduction of beam J and the number of polygraphic substances, thereby reducing nuclear reaction strength and temperature; when the polylate temperature is less than 700° C, open the valve, push the polymented substance in the shallow P push back into the reaction kettle, enhance the rib stream J, increase the reinforcement, and the temperature increases;
another method is that when the temperature is close to To, the boron 10 isolation plate is inserted into an appropriate depth to reduce the reaction intensity;
when the temperature of the fusion material is lower than 700° C , the boron 10 isolation plate is pulled out, and the reaction is enhanced and the temperature rises;
when the fusion reaction makes the temperature of the fusion substance exceed its melting point, the vapor of the fusion substance will be produced; When the boiling point is reached, a large amount of steam is produced. After the steam flows out, the fusion substance decreases and the reaction intensity decreases.
the steam flows from the steam outlet above the reaction kettle to the steam pipeline, which is connected to the cylinder below the bottom plate of the reaction kettle. The steam pipeline is made of boron 10, and a cooling fluid pipeline is arranged outside the steam pipeline, the circulating fluid in the cooling fluid pipeline cools the fusion substance steam in the steam pipeline into a liquid state; the outlet of the steam pipeline is on the cylinder below the bottom plate of the reaction kettle, and a one-way open valve is installed at the outlet after the fusion material steam is cooled to liquid state, it pushes the one-way valve along the pipeline, flows into the cylinder under the bottom plate of the reaction kettle, and is finally pushed back to the reaction kettle V, the one-way valve blocks the molten liquid in the cylinder from flowing to the steam pipeline;
nuclear beam accelerated by the linear accelerator to J energy setting, perpendicularly incident on the fusion material, with the nuclear fusion reactions occurring substance released neutrons, neutron induced nuclear fusion reactor materials series, neutrons and other particles released and nuclear; triton t corresponding to the beam, the neutrons released major nuclear reaction is as follows:
²H(t, n)⁴He, Q=17.6MeV (1)
⁷Li(t, n2α)n, Q=8.864MeV (2)
the main nuclear reactions corresponding to deuteron d beam and neutron release are as follows:
²H(d, n)³He, Q=3.26891MeV (3)
⁷Li(d, nα)⁴He, Q=15.12168MeV, (4)
⁷Li(d, p)⁸Li, Q=-0.19194MeV, (5)
⁸Li→β⁻+2α+16MeV, T_{1/2}=838m, (6)
The main nuclear reactions corresponding to proton P beam and neutron release are as follows:
²H(p, np)¹H, Q=-2.22457MeV (7)
⁷Li(p, n)⁷Be, Q=-1.64424MeV (8)
⁷Be+e⁻→⁷Li+0.8819MeV, T_{1/2}=53.29d (9)
The main fusion reactions caused by neutrons are as follows:
⁶Li(n, t)⁴He, Q=4.783MeV, (10)
⁶Li(n, nd)⁴He, Q=-1.47515MeV, (11)
²H(n, 2n) ¹H, Q=-2.224MeV, (12)
⁷Li(n, nα)³H, Q=-2.46515MeV, (13)
³He(n, p)³H, Q=0.764MeV, (14)
it can be seen from (1)-(14) that these reactions constitute a circular and sustainable reaction;
beryllium has a large reflection cross section for neutrons, σ (10 µ eV)= 120b, especially for low energy neutrons, so the neutron reflection layer is made by ⁹Be;
a neutron absorption layer is arranged on the outer surface of the reactor V;
the absorption cross section of boron for neutrons is very large, σ (10 µ eV)=2× 10⁵b, therefore, the neutron absorption layer is made; the reaction is as follows,
¹⁰B(n,α)⁷Li,,Q=2.79055MeV, (15)
¹⁰B(n, tα)⁴He,, Q=2.79055MeV (16)
the thermal energy output system H generated by the nuclear reaction is composed of cooling fluid in the gap between the neutron absorption layer and the outer shell layer and the pipeline connected with it, and a power device that drives these fluids to circulate;
conductor system power output terminal E from the DC power supply, DC power supply, respectively positive and negative electrodes and electrical communication with the opposite points in the reactor configuration V, such that the nuclear reaction produced positive ions and electrons to flow through the electrical power supply, respectively, a negative electrode and the positive electrode, the output power;
an electric heating device W is arranged below a plurality of shallow pipelines P connected with the valve opening O, which can reheat and melt the cooled and solidified fusion material as required;
the manner described above, the reactor charged proportionally V lithium deuteride fusion material 6 and lithium 7 deuteride, accelerator actuation, the input beam nuclear, nuclear energy is released there; otherwise, turn off the accelerator, the substance flowing from the fusion reactor, nuclear reaction stops.

2. The device and method of claim 1, in the fusion material, beryllium pow ⁹Be is added in a weight ratio of 20 to 60 percent of lithium deuterate 6, 60 to 20 percent of lithium deuterate 7, beryllium powder ⁹Be is 20 to 40 percent; the main nuclear reaction associated with beryllium is:
⁹Be(d, α)⁷Li, Q=7.15215MeV, (17)
⁹Be(d, t) ⁸Be, Q=4.59269MeV, (18)
⁸Be→2α+0.09188, T_{1/2}=6.7eV (19)
⁹Be(d, γ)¹¹B, Q=15.81646MeV, (20)
⁹Be(d, d2α)n, Q=-1.5727MeV, (21)
⁹Be(d, 2α)³H, Q=4.68453MeV, (22)
⁹Be(n, 2n)⁸Be, Q=-1.6655MeV, (23)
⁹Be(n, α)⁶He, Q=-0.598MeV, (24)
⁶He→β⁻+⁶Li+3.5067MeV, T_{1/2}=806.7m (25)
⁹Be(t, n) ¹¹B, Q=9.55924MeV, (26)
⁹Be(t, t2α)n, Q=-1.5727MeV, (27)
⁹Be(t, nd2α)n, Q=-1.5727MeV, (28)
⁹Be(α, n)¹²C, Q=5.70205MeV, (29)
⁹Be(α, nα)⁸Be, Q=-1.66454MeV, (30)
⁹Be(p, n)⁹B, Q=-1.66454MeV, (31)
⁹B→p+2α+0.2771MeV, T_{1/2}=0.54keV. (32)
